# EUROPÄISCHE PATENTSCHRIFT

(11) **EP 3 676 899 B1**
(45) Veröffentlichungstag und Bekanntmachung des Hinweises auf die Patenterteilung: **21.07.2021**
(21) Anmeldenummer: 18765021.3
(22) Anmeldetag: 17.08.2018
(51) Int. Cl.: H01M 8/1004, H01M 8/0276, H01M 4/86, H01M 8/0284, H01M 8/1018

(54) **MEMBRAN-ELEKTRODEN-EINHEIT MIT EINER DICHTUNGSANORDNUNG, BRENNSTOFFZELLE SOWIE BRENNSTOFFZELLENSTAPEL**
MEMBRANE ELECTRODE UNIT WITH A SEAL ARRANGEMENT, FUEL CELL, AND FUEL CELL STACK
UNITÉ D'ÉLECTRODE À MEMBRANE AVEC ENSEMBLE DE GARNITURE D'ÉTANCHÉITÉ, PILE À COMBUSTIBLE ET EMPILEMENT DE PILE À COMBUSTIBLE

(30) Priorität: 28.08.2017 DE 102017214983
(43) Veröffentlichungstag der Anmeldung: 08.07.2020
(73) Patentinhaber: Audi AG, 85045 Ingolstadt (DE); VOLKSWAGEN AG, 38440 Wolfsburg (DE)
(72) Erfinder: RECKERS, Matthias, 38104 Braunschweig (DE); SCHOLZ, Hannes, 38106 Braunschweig (DE)
(86) Internationale Anmeldenummer: PCT/EP2018/072326
(87) Internationale Veröffentlichungsnummer: WO 2019/042794

(56) Entgegenhaltungen:
- EP-A1- 1 403 949
- EP-A1- 1 671 388
- DE-A1-102013 014 083
- DE-A1-102015 100 740
- US-A1- 2009 004 543
- US-B1- 6 716 550

## Beschreibung

Die Erfindung betrifft eine Membran-Elektroden-Einheit mit einer am Kantenbereich angeordneten Dichtung, wobei die Dichtung zu einem Teil in den Kantenbereich der Membran-Elektroden-Einheit eingedrungen vorliegt und zu einem anderen Teil außerhalb der Membran-Elektroden-Einheit den Kantenbereich vollständig bedeckend vorliegt, eine Brennstoffzelle sowie einen Brennstoffzellenstapel.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Einheit (MEA für membrane electrode assembly), die ein Verbund aus einer ionenleitenden, insbesondere protonenleitenden Membran und jeweils einer beidseitig an der Membran angeordneten Elektrode (Anode bzw. Kathode) ist. Zudem sind Gasdiffusionsschichten (GDL) beidseitig der Membran-Elektroden-Einheit an den der Membran abgewandten Seiten der Elektroden angeordnet. In der Regel wird die Brennstoffzelle durch eine Vielzahl, im Stapel (stack) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die Brennstoffzelle wird durch eine Vielzahl im Stapel angeordneter Einzelzellen gebildet, sodass auch von einem Brennstoffzellenstapel gesprochen wird. Zwischen den Membran-Elektroden-Einheiten sind Bipolarplatten angeordnet, welche eine Versorgung der Einzelzellen mit den Betriebsmedien, also den Reaktanden und einer Kühlflüssigkeit sicherstellen. Zudem sorgen die Bipolarplatten für einen elektrisch leitfähigen Kontakt zu den Membran-Elektroden-Einheiten.

Zwischen den Membran-Elektroden-Einheiten und den Bipolarplatten sind Dichtungen angeordnet, welche die Anoden- und Kathodenräume nach außen abdichten und ein Austreten der Betriebsmedien aus der Brennstoffzelle verhindern.

Die Dichtungen können seitens der Membran-Elektroden-Einheiten oder der Bipolarplatten vorgesehen und insbesondere mit diesen Komponenten verbunden sein.

In der EP 1 906 476 A1 wird eine Dichtungsstruktur für eine Brennstoffzelle und ein Verfahren zu dessen Herstellung offenbart, die am Rand einer Membran-Elektroden-Einheit angeformt ist und Dichtlippen ausbildet, die eine Abdichtung in Bezug auf die Separatorplatten bewirken. In die Dichtungsstruktur ist zudem die aus der MEA herausragende Membran eingebunden. Bei Herstellung der Dichtungsstruktur wird ein Randbereich der MEA mit dem Dichtungsmaterial imprägniert.

Die WO 2007/022464 A2 beschreibt eine Dichtungsstruktur für eine Brennstoffzelle, die an einer geraden Schnittkante der Membran-Elektroden-Einheit angeordnet wird und diese umgreift. Die Dichtungsstruktur kann unterschiedliche Profilierungen aufweisen, die an den Separatoren anliegen und gasdichte Räume bereitstellen.

US 2007/0003821 A1 betrifft eine einteilige gegossene Dichtung zur Abdichtung gegenüber den Separatoren für eine Brennstoffzelle, bei der die Membran der Membran-Elektroden-Einheit in die Dichtung eingearbeitet ist. Ein Eindringen des Dichtungsmaterials in die Membran-Elektroden-Einheit erfolgt nur geringfügig im Oberflächenbereich.

DE 10 2013 014083 A1 beschreibt ein Verfahren zur Herstellung einer umlaufenden Dichtung für Membran-Elektroden-Einheiten, die seitlich der Membran in die Gasdiffusionselektroden eindringt. Weiterhin erfolgt eine Verbindung der Dichtung mit einem Dichtrahmen.

US 2009/004543 A1 beschreibt eine Membran-Elektroden-Anordnung mit einer Membran und zwei Gasdiffusionsschichten sowie ein mit der Membran verbundenes Rahmenelement.

US 6716550 B1 offenbart eine Membran-Elektroden-Einheit, an deren Kantenbereich einen Dichtungsrahmen angeordnet ist. Der Dichtungsrahmen weist eine Aussparung auf, in welche die Membran, die im Kantenbereich die Elektroden mit den Gasdiffusionslagen überragt, hineinragt.

EP 1 671 388 A0 betrifft eine Membran und eine Membran-Elektroden-Einheit für Brennstoffzellen. Die Membran ist mit einem Dichtungsmaterial versehen, das im Randbereich auf einer Seite der Membran aufgebracht ist. DE 10 2015 100 740 A1 betrifft eine Membran-Elektroden-Einheit, wobei der äußere Rand der anodenseitigen elektrochemisch aktiven Fläche gegenüber dem äußeren Rand der kathodenseitigen elektrochemisch aktiven Fläche senkrecht zur Stapelrichtung versetzt angeordnet ist.

Der Erfindung liegt nun die Aufgabe zugrunde, eine Membran-Elektroden-Einheit mit einer Dichtungsanordnung bereitzustellen, die eine Dichtung der Gasräume einer Brennstoffzelle ermöglicht und gleichzeitig bei Membran-Elektroden-Einheiten mit flush-cut (Glattschnitt) zuverlässig einen Leckagepfad an der Schnittkante unterbricht.

Diese Aufgabe wird durch eine Membran-Elektroden-Einheit nach Anspruch 1 gelöst.

Vorteilhafte Ausgestaltungen der Erfindung sind in den Unteransprüchen gekennzeichnet.

Erfindungsgemäß wird eine Membran-Elektroden-Einheit bereitgestellt mit einer Dichtung, die am Kantenbereich der Membran-Elektroden-Einheit angeordnet ist, wobei die Dichtung zu einem Teil in den Kantenbereich der Membran-Elektroden-Einheit eingedrungen vorliegt und zu einem anderen Teil außerhalb der Membran-Elektroden-Einheit den Kantenbereich auf beiden Seiten umgreifend und vollständig bedeckend vorliegt. Die Membran-Elektroden-Einheit umfasst ferner eine Dichtungsrahmen, der diese umgibt und den Kantenbereich mit der Dichtung beidseitig umgreift.

Unter Membran-Elektroden-Einheit wird im Rahmen der Anmeldung der Verbund aus einer ionenleitenden, insbesondere protonenleitenden Membran und jeweils einer beidseitig an der Membran angeordneten Elektrode (Anode bzw. Kathode) und beidseitig angeordneten Gasdiffusionsschichten (GDL) verstanden.

Dichtungsrahmen bedeutet, dass auch dieser mit einer Dichtungsfunktion ausgestattet ist. Dazu kann der Dichtungsrahmen selber aus einem dichtenden (elastischen) Material bestehen und/oder mit zumindest einer Dichtung versehen sein, wobei vorzugsweise die zumindest eine Dichtung jeweils auf beiden Seiten des Dichtungsrahmens angeordnet ist.

Die Kante der Membran-Elektroden-Einheit wird bei der Vereinzelung von auf Rollen vorliegendem Material mittels flush-cut (Glattschnitt) ausgebildet, so dass alle Lagen der Membran-Elektroden-Einheit gleich dimensioniert sind.

So können vorteilhafterweise zwei Dichtungsfunktionen in der erfindungsgemäßen Membran-Elektroden-Einheit vereint werden. Zum einen wird durch die Dichtung am Kantenbereich der MEA der Anodengasraum gegen den Kathodengasraum (interne Dichtung) abgedichtet und zum anderen werden der Anodengasraum und der Kathodengasraum gegen die Umgebung (externe Dichtung) abgedichtet. Bei der internen Dichtung wird der Austausch von Reaktionsgas über die Kante der MEA unterbunden.

Durch die Bereitstellung der beiden Dichtungsfunktionen durch unterschiedliche Bauteile kann die MEA vorteilhafterweise als Rollenmaterial verarbeitet und vereinzelt werden und anschließend in beliebigen Einzelzellkonzepten aufgrund des Dichtungsrahmens eingesetzt werden.

Die Dichtungsmasse kann 0,1 bis 1 mm, vorzugsweise 0,2 bis 0,7 mm, besonders bevorzugt 0,4 bis 0,6 mm und am bevorzugtesten 0,5 mm in die MEA bzw. die GDL eingedrungen vorliegen, so dass Undichtigkeiten sicher vermieden werden können. Gleichzeitig wird vorteilhafterweise nur ein geringer Anteil der MEA bzw. des aktiven Bereichs durch die Dichtung funktionslos. Die Eindringtiefe kann über die Einstellung der Viskosität des nicht gehärteten Dichtungsmaterials variiert werden.

Durch die Dichtung ist nicht nur der Kantenbereich der Membran-Elektroden-Einheit bedeckt, sondern auch ein Teil der Ober- und Unterseite der MEA, um die Gefahr von Leckagen der Dichtung nochmals zu reduzieren. Die Ausdehnung auf Ober- und Unterseite sollte natürlich möglichst gering sein. Die Dimensionierung entspricht vorzugsweise der oben beschriebenen Eindringtiefe.

Nach einer bevorzugten Ausführungsform der Membran-Elektroden-Einheit ist der Dichtungsrahmen einteilig ausgebildet. Dies bedeutet, dass der Dichtungsrahmen vorzugsweise ein winkelförmiges oder L-förmiges Querschnittsprofil aufweist. In einen derartigen Dichtungsrahmen, der vorteilhafterweise vorgefertigt werden kann, wird die Membran-Elektroden-Einheit eingelegt und gegebenenfalls fixiert.

Eine andere Art der Fixierung stellt eine andere bevorzugte Ausführungsform dar. Hierbei wird der vorgenannte einteilige Dichtungsrahmen auf der Seite, von der die Membran-Elektroden-Einheit eingelegt wird, nach dem Einlegen mit einem entsprechenden Rahmenteil verschlossen. Demgemäß ist der Dichtungsrahmen zweiteilig ausgestaltet.

Bei einer anderen zweiteiligen, bevorzugten Ausgestaltung des Dichtungsrahmens werden zwei gleich ausgeformte Rahmenteile miteinander verklebt, verschweißt oder dergleichen. Die beiden Rahmenteile bestehen jeweils vorzugsweise aus Kunststofffolien, vorzugsweise Polyethylenterephthalat-(PET) oder Polyethylennaphthalat- (PEN) Folie.

Vorzugsweise kann der Dichtungsrahmen in allen Ausführungsformen zudem einen umlaufenden Rand besitzen, der sich in der Ebene der MEA von dieser weg erstreckt. Durch den Rand verbessert sich die Handhabbarkeit und die Stabilität der Membran-Elektroden-Einheit. Auf den umlaufenden Rand kann vorteilhafterweise zumindest eine Dichtung aufgebracht werden. Die zumindest eine Dichtung wird besonders bevorzugt auf beiden Seiten des Dichtungsrahmens vorgesehen.

Die Ausgestaltung und Anordnung der Dichtung kann problemlos den jeweiligen Gegebenheiten angepasst werden. So können auch zwei oder mehr Dichtungen auf den jeweiligen Seiten der Membran-Elektroden-Einheit hintereinander angeordnet werden.

Der Dichtungsrahmen und dessen Bestandteile werden vorzugsweise aus einem Polymer gefertigt. Geeignete Polymere sind dem Fachmann grundsätzlich aus dem Stand der Technik bekannt. Wenn der Dichtungsrahmen selber eine Dichtwirkung ausweisen soll, wird dieser vorzugsweise aus einem Silikon gefertigt.

Die Dichtung ist vorzugsweise aus einem polymeren Material gefertigt, dessen Monomer eine so geringe Viskosität aufweist, dass ein Eindringen entlang der Kante in die MEA ermöglicht wird, so dass sich kein Spalt zwischen MEA und Dichtung ergeben kann und auch die poröse GDL auf beiden Seiten verschlossen wird, also die Porosität im Randbereich auf Null reduziert werden kann. Geeignete Polymere sind dem Fachmann grundsätzlich aus dem Stand der Technik bekannt, wobei Silikone bevorzugt eingesetzt werden.

Gegenstand der Erfindung ist zudem ein Brennstoffzellenstapel, der eine Vielzahl von erfindungsgemäßen Membran-Elektroden-Einheiten, die abwechselnd mit Bipolarplatten geschichtet sind, aufweist.

Die Bipolarplatten können jeweils auf der zur Membran-Elektroden-Einheit gewandten Seite ebenfalls zumindest eine Dichtung aufweisen, die mit dem Dichtungsrahmen oder dessen Bestandteilen korrespondieren.

Weitere Aspekte der Erfindung betreffen ein Brennstoffzellensystem, das einen Brennstoffzellenstapel gemäß der Erfindung aufweist sowie ein Fahrzeug, das ein Brennstoffzellensystem mit einem erfindungsgemäßen Brennstoffzellenstapel aufweist. Bei dem Fahrzeug handelt es sich vorzugsweise um ein Elektrofahrzeug, bei dem eine von dem Brennstoffzellensystem erzeugte elektrische Energie der Versorgung eines Elektrotraktionsmotors und/oder einer Traktionsbatterie bedient.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: in einer Draufsicht ein Bipolarplatte mit einer darauf angeordneten Membran-Elektroden-Einheit,
- Figur 2: in einer geschnittenen Teilansicht der Randbereich einer MEA in einem Dichtungsrahmen,
- Figur 3: in einer geschnittenen Teilansicht der Randbereich der MEA in einem Dichtungsrahmen nach Figur 2 zwischen zwei Separatorplatten,
- Figur 4: in einer geschnittenen Teilansicht der Randbereich der MEA in einem Dichtungsrahmen nach Figur 2 zwischen zwei Separatorplatten nach einer zweiten Ausführungsform,
- Figur 5: in einer geschnittenen Teilansicht der Randbereich einer MEA mit einer Variation des Dichtungsrahmens (nicht Teil der vorliegenden Erfindung), und
- Figur 6: in einer geschnittenen Teilansicht der Randbereich einer MEA mit einer weiteren Variation des Dichtunsrahmens.

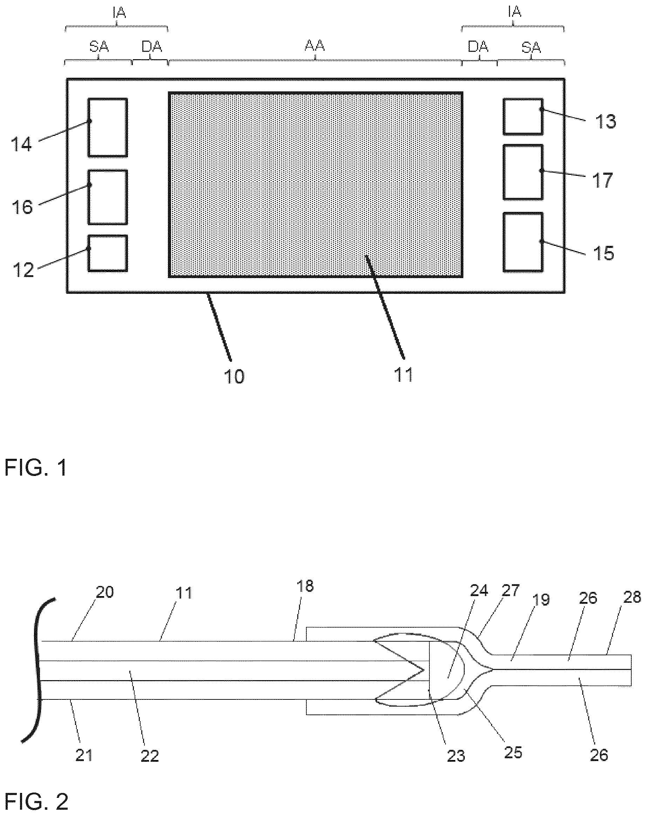

Figur 1 zeigt eine Bipolarplatte 10 mit einer darauf angeordneten MEA 11.

Beide Bauteile unterteilen sich in einen aktiven Bereich AA und inaktive Bereiche IA. Der aktive Bereich AA zeichnet sich dadurch aus, dass in diesem Bereich die Brennstoffzellreaktionen stattfinden. Die inaktiven Bereiche IA lassen sich jeweils in Versorgungsbereiche SA und Verteilerbereiche DA unterteilen. Innerhalb der Versorgungsbereiche SA sind Versorgungsöffnungen 12 bis 17 angeordnet, die im gestapelten Zustand im Wesentlichen miteinander fluchten und Hauptversorgungskanäle innerhalb eines nicht dargestellten Brennstoffzellenstapels ausbilden. Die Anodeneinlassöffnung 12 dient der Zuführung des Anodenbetriebsgases, also des Brennstoffs, beispielsweise Wasserstoff. Die Anodenauslassöffnung 13 dient der Abführung des Anodenabgases nach Überströmen des aktiven Bereichs AA. Die Kathodeneinlassöffnung 14 dient der Zuführung des Kathodenbetriebsgases, das insbesondere Sauerstoff oder ein sauerstoffhaltiges Gemisch, vorzugsweise Luft ist. Die Kathodenauslassöffnung 15 dient der Abführung des Kathodenabgases nach Überströmen des aktiven Bereichs AA. Die Kühlmitteleinlassöffnung 16 dient der Zuführung und die Kühlmittelauslassöffnung 17 der Ableitung des Kühlmittels.

In Figur 2 ist der Randbereich 18 einer MEA 11 in einem Dichtungsrahmen 19 dargestellt. Die MEA 11 besteht aus einer zwischen zwei Gasdiffusionsschichten 20, 21 angeordneten Polymerelektrolytmembran 22.

An dem Kantenbereich 23 der MEA 11 ist eine Dichtung 24 vorgesehen, die den Kantenbereich 23 umgreift. Zudem wird der Randbereich 18 von dem Dichtungsrahmen 19 umgriffen, der an dem Kantenbereich 23 der MEA 11 einen Hohlraum 25 ausbildet, der zumindest teilweise von der Dichtung 24 ausgefüllt wird. Der Hohlraum 25 verhindert vorteilhafterweise, auch bei anderen Ausführungsformen des Dichtungsrahmens 19, dass das später in Stapelrichtung gestauchte Elastomer der Dichtung 24 keinen Ausdehnungsraum hat und dann die Anpresskraftverteilung ungünstig wird. In Figur 2 und auch in den nachfolgenden Figuren ist die Dichtung 24 nur schematisch dargestellt. Diese wird durch den Rahmen 19 begrenzt. Der Dichtungsrahmen 19 besteht auf zwei gleichartig ausgeformten Rahmenteilen 26, die miteinander verbunden sind und im Verbindungsbereich 27 einen umlaufenden Rand 28 ausbilden, der sich von der MEA 11 weg erstreckt. Die Rahmenteile 26 werden vorzugsweise mittels Kunststofffolien ausgebildet.

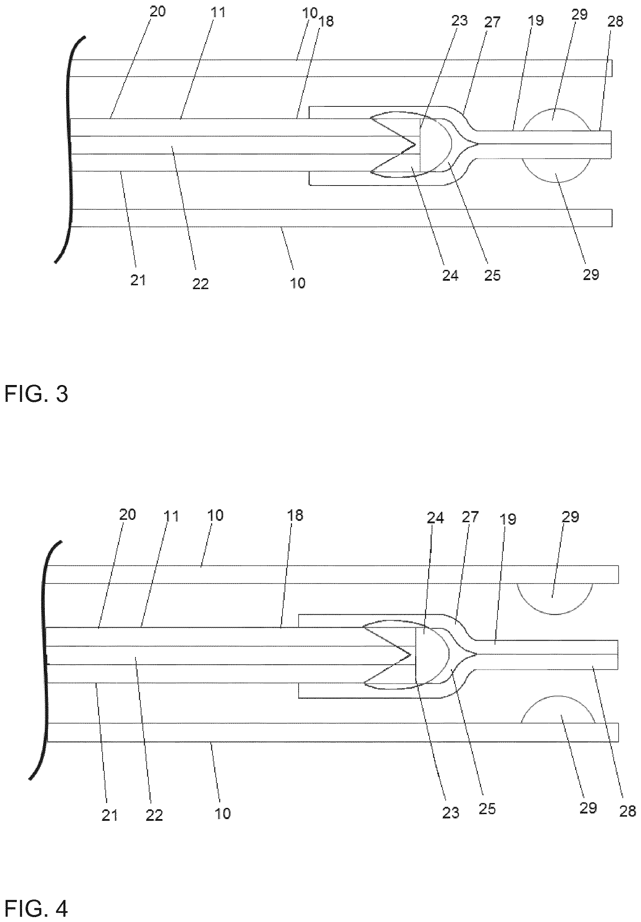

In den Figuren 3 und 4 ist die gleiche Ausführungsform der MEA 11 mit einem Dichtungsrahmen 19 dargestellt, wobei auf beiden Seiten der MEA 11 jeweils eine Separatorplatte 10 angeordnet ist. In Figur 3 ist beidseitig auf dem umlaufenden Rand 28 eine Dichtung 29 angeordnet, die die Gasräume abdichtet. Bei der Ausführungsform nach Figur 4 sind die Dichtungen 29 jeweils auf den Separatorplatten 10 korrespondierend mit dem umlaufenden Rand 28 des Dichtungsrahmens 19 vorgesehen.

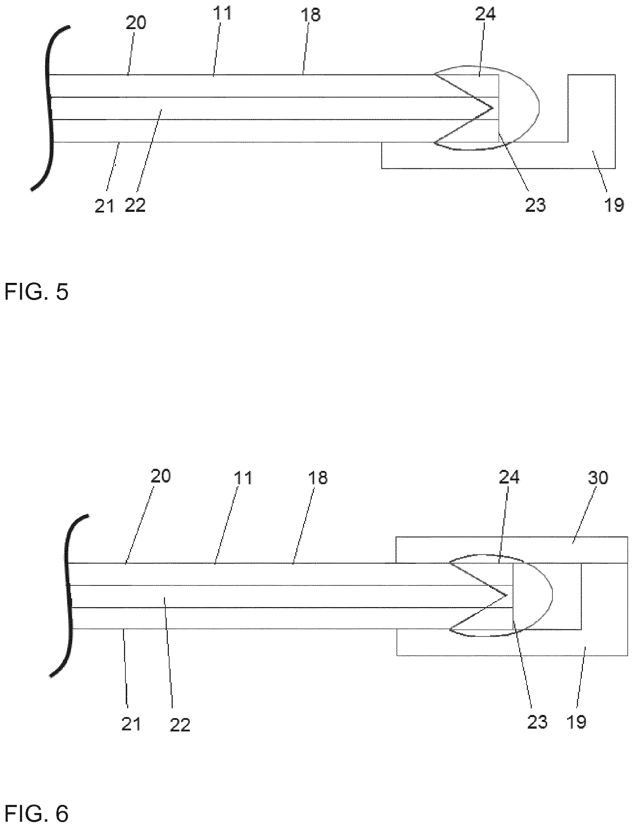

Figur 5 zeigt eine MEA 11 mit einem einteiligen Dichtungsrahmen 19 mit einem L-förmigen Querschnittsprofil (nicht Teil der vorliegenden Erfindung), so dass die MEA 11 bei der Montage einfach in den Dichtungsrahmen 19 eingelegt und optional fixiert werden kann. Dieser Dichtungsrahmen 19 kann selber aus einem dichtenden Material bestehen oder mit zumindest einer Dichtung, vorzugsweise auf beiden Seiten versehen sein.

Basierend auf der in Figur 5 dargestellten Variante des einteiligen Dichtungsrahmens 19 ist in Figur 6 die MEA 11 in einen Dichtungsrahmen 19 eingebracht, der mit einem Rahmenteil 30 verschlossen wird, so dass der Dichtungsrahmen 19 erfindungsgemäss insgesamt ein U-förmiges Querschnittsprofil besitzt.

### BEZUGSZEICHENLISTE:

- 10: Bipolarplatte (Separatorplatte, Flussfeldplatte)
- 11: Membran-Elektroden-Anordnung (MEA)
- 12: Anodeneinlassöffnung / Versorgungsöffnung
- 13: Anodenauslassöffnung / Versorgungsöffnung
- 14: Kathodeneinlassöffnung / Versorgungsöffnung
- 15: Kathodenauslassöffnung / Versorgungsöffnung
- 16: Kühlmitteleinlassöffnung / Versorgungsöffnung
- 17: Kühlmittelauslassöffnung / Versorgungsöffnung
- 18: Randbereich
- 19: Dichtungsrahmen
- 20, 21: Gasdiffusionsschichten
- 22: Polymerelektrolytmembran
- 23: Kantenbereich
- 24: Dichtung
- 25: Hohlraum
- 26: Rahmenteile
- 27: Verbindungsbereich
- 28: umlaufender Rand
- 29: Dichtung
- 30: Rahmenteil

- AA: Aktiver Bereich (Reaktionsbereich, active area)
- IA: Inaktiver Bereich (inactive area)
- SA: Versorgungsbereich (supply area)
- DA: Verteilerbereich (distribution area)

## Patentansprüche

1. Membran-Elektroden-Einheit (11) mit
einer Dichtung (24), die am Kantenbereich (23) der Membran-Elektroden-Einheit (11) angeordnet ist, wobei die Dichtung (24) zu einem Teil in den Kantenbereich (23) der Membran-Elektroden-Einheit (11) eingedrungen vorliegt und zu einem anderen Teil außerhalb der Membran-Elektroden-Einheit (11) den Kantenbereich (23) auf beiden Seiten umgreifend und vollständig bedeckend vorliegt, und
einen Dichtungsrahmen (19), der die Membran-Elektroden-Einheit (11) umgibt und den Kantenbereich (23) mit der Dichtung (24) beidseitig umgreift.

2. Membran-Elektroden-Einheit (11) nach Anspruch 1, **dadurch gekennzeichnet, dass** die Dichtung (24) 0,1 bis 1 mm, vorzugsweise 0,5 mm in die Membran-Elektroden-Einheit (11) eingedrungen vorliegt und/oder den Kantenbereich (23) auf beiden Seiten der Membran-Elektroden-Einheit (11) 0,1 bis 1 mm, vorzugsweise 0,5 mm umgreift.

3. Membran-Elektroden-Einheit (11) nach Anspruch 1 oder 2, **dadurch gekennzeichnet, dass** der Dichtungsrahmen (19) einteilig oder zweiteilig ausgebildet ist.

4. Membran-Elektroden-Einheit (11) nach einem der Ansprüche 1 bis 3, **dadurch gekennzeichnet, dass** der Dichtungsrahmen (19) einen umlaufenden Rand (28) besitzt, der sich in der Ebene der Membran-Elektroden-Einheit (11) von dieser weg erstreckt, wobei auf dem umlaufenden Rand (28) auf einer oder beiden Seiten zumindest eine Dichtung (30) angeordnet ist.

5. Membran-Elektroden-Einheit (11) nach einem der Ansprüche 1 bis 4, **dadurch gekennzeichnet, dass** der Dichtungsrahmen (19) aus einem Polymer besteht, das dichtende Eigenschaften aufweisen kann.

6. Membran-Elektroden-Einheit (11) nach einem der Ansprüche 1 bis 5, **dadurch gekennzeichnet, dass** die Dichtungen (24, 29) aus einem polymeren Material, vorzugsweise einem Silikon besteht.

7. Brennstoffzelle eine Membran-Elektroden-Einheit (11) nach einem der Ansprüche 1 bis 6 aufweisend.

8. Brennstoffzellenstapel eine Vielzahl von Brennstoffzellen nach Anspruch 7 mit Membran-Elektroden-Einheiten (11) und Bipolarplatten (10) aufweisend.

9. Brennstoffzellenstapel nach Anspruch 8, **dadurch gekennzeichnet, dass** die Bipolarplatten (10) auf beiden Seiten zumindest eine Dichtung (29) aufweisen, die mit dem Dichtungsrahmen (19) der benachbart angeordneten Membran-Elektroden-Einheiten (11) korrespondieren.

## Claims

1. Membrane electrode unit (11) with
a seal (24) which is arranged on the edge region (23) of the membrane electrode unit (11), wherein the seal (24) on the one hand penetrates into the edge region (23) of the membrane electrode unit (11) and on the other hand grips around and fully covers the edge region (23) on both sides outside the membrane electrode unit (11), and
a sealing frame (19) which surrounds the membrane electrode unit (11) and grips around the edge region (23) with the seal (24) on both sides.

2. Membrane electrode unit (11) according to claim 1, **characterised in that** the seal (24) penetrates 0.1 to 1 mm, preferably 0.5 mm, into the membrane electrode unit (11) and/or grips 0.1 to 1 mm, preferably 0.5 mm, around the edge region (23) on both sides of the membrane electrode unit (11).

3. Membrane electrode unit (11) according to claim 1 or 2, **characterised in that** the sealing frame (19) is configured in one piece or two pieces.

4. Membrane electrode unit (11) according to any of claims 1 to 3, **characterised in that** the sealing frame (19) has a peripheral edge (28) which extends in the plane of the membrane electrode unit (11) away from the latter, wherein at least one seal (30) is arranged on the peripheral edge (28) on one or both sides.

5. Membrane electrode unit (11) according to any of claims 1 to 4, **characterised in that** the sealing frame (19) consists of a polymer which can have sealing properties.

6. Membrane electrode unit (11) according to any of claims 1 to 5, **characterised in that** the seals (24, 29) consist of a polymer material, preferably a silicone.

7. Fuel cell having a membrane electrode unit (11) according to any of claims 1 to 6.

8. Fuel cell stack having a plurality of fuel cells according to claim 7 with membrane electrode units (11) and bipolar plates (10).

9. Fuel cell stack according to claim 8, **characterised in that** the bipolar plates (10) have at least one seal (29) on both sides which correspond with the sealing frame (19) of the adjacent arranged membrane electrode units (11).

## Revendications

1. Unité d'électrode à membrane (11) avec
une garniture d'étanchéité (24) qui est agencée au niveau de la zone d'arête (23) de l'unité d'électrode à membrane (11), dans laquelle la garniture d'étanchéité (24) se présente enfoncée pour une partie dans la zone d'arête (23) de l'unité d'électrode à membrane (11) et se présente entourant sur les deux côtés et recouvrant complètement la zone d'arête (23) pour une autre partie en dehors de l'unité d'électrode à membrane (11), et
un cadre de garniture d'étanchéité (19) qui entoure l'unité d'électrode à membrane (11) et enveloppe de part et d'autre la zone d'arête (23) avec la garniture d'étanchéité (24).

2. Unité d'électrode à membrane (11) selon la revendication 1, **caractérisée en ce que** la garniture d'étanchéité (24) se présente enfoncée de 0,1 à 1 mm, de préférence de 0,5 mm dans l'unité d'électrode à membrane (11) et/ou enveloppe la zone d'arête (23) des deux côtés de l'unité d'électrode à membrane (11) de 0,1 à 1 mm, de préférence de 0,5 mm.

3. Unité d'électrode à membrane (11) selon la revendication 1 ou 2, **caractérisée en ce que** le cadre de garniture d'étanchéité (19) est réalisé en une partie ou en deux parties.

4. Unité d'électrode à membrane (11) selon l'une quelconque des revendications 1 à 3, **caractérisée en ce que** le cadre de garniture d'étanchéité (19) possède un bord (28) périphérique qui s'étend dans le plan de l'unité d'électrode à membrane (11) loin de celle-ci, dans laquelle au moins une garniture d'étanchéité (30) est agencée sur le bord (28) périphérique sur un ou les deux côtés.

5. Unité d'électrode à membrane (11) selon l'une quelconque des revendications 1 à 4, **caractérisée en ce que** le cadre de garniture d'étanchéité (19) consiste en un polymère qui peut présenter des propriétés d'étanchéité.

6. Unité d'électrode à membrane (11) selon l'une quelconque des revendications 1 à 5, **caractérisée en ce que** les garnitures d'étanchéité (24, 29) consistent en un matériau polymère, de préférence une silicone.

7. Pile à combustible présentant une unité d'électrode à membrane (11) selon l'une quelconque des revendications 1 à 6.

8. Empilement de piles à combustible présentant une pluralité de piles à combustible selon la revendication 7 avec des unités d'électrode à membrane (11) et des plaques bipolaires (10).

9. Empilement de piles à combustible selon la revendication 8, **caractérisé en ce que** les plaques bipolaires (10) présentent des deux côtés au moins une garniture d'étanchéité (29) qui correspond au cadre de garniture d'étanchéité (19) des unités d'électrode à membrane (11) agencées de manière contiguë.
